(19) **Europäisches Patentamt / European Patent Office / Office européen des brevets**

(11) **EP 3 831 794 B1**

(12) **EUROPEAN PATENT SPECIFICATION**

(45) Date of publication and mention
of the grant of the patent:
**11.01.2023 Bulletin 2023/02**

(51) International Patent Classification (IPC):
*C04B 26/26* (2006.01)   *E01C 7/18* (2006.01)
*C04B 103/00* (2006.01)   *C04B 111/00* (2006.01)

(21) Application number: **19827481.3**

(22) Date of filing: **21.06.2019**

(52) Cooperative Patent Classification (CPC):
(C-Sets available)
**E01C 7/182; C04B 26/26;** C04B 2103/0027;
C04B 2111/0075; Y02A 30/60          (Cont.)

(86) International application number:
**PCT/ES2019/070432**

(87) International publication number:
**WO 2020/002730 (02.01.2020 Gazette 2020/01)**

(54) **ASPHALT PAVEMENTS HAVING HIGH SOLAR REFLECTANCE**

ASPHALTSTRASSENDECKEN MIT HOHER SONNENLICHTREFLEXION

REVÊTEMENTS ASPHALTIQUES À HAUTE RÉFLECTANCE SOLAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2018 ES 201830642**

(43) Date of publication of application:
**09.06.2021 Bulletin 2021/23**

(73) Proprietor: **CHM Obras e Infraestructuras S.A.
03008 Alicante (ES)**

(72) Inventor: **SIMÓN GRAU, José
03008 Alicante (ES)**

(56) References cited:
CN-A- 103 694 725      CN-A- 106 752 847
KR-B1- 100 819 500      US-A1- 2008 168 926
US-A1- 2015 020 710

• GRAU et al.: "Pavimentos reflectantes para la mitigation del cambio climatico", Estudio teorico y de laboratorio. ASFALTO y pavimentación, vol. VIII, no. 28 26 March 2018 (2018-03-26), pages 71-13, XP055771065, Retrieved from the Internet: URL:https://www.asefma.es/wp-content/uploads/2018/03/13_jsimon.pdf

(52) Cooperative Patent Classification (CPC): (Cont.)

C-Sets
**C04B 26/26, C04B 14/14, C04B 14/28,
C04B 14/305, C04B 14/308, C04B 20/0076,
C04B 38/0074**

**Description**

The object of the present invention for patent purposes is a range of asphalt pavements for continuous AC mixtures and discontinuous BBTM mixtures having high solar reflectance "SR" or albedo, equal to or greater than 33 %, which is the required value in accordance with LEED v4 BD+C certification so as to be classified as mitigating reflective surfaces of the urban heat island effect.

These pavements are governed by physicochemical parameters that determine the type and composition of the asphalt mixtures, in accordance with the General Technical Specifications for Road and Bridge Works PG-3, such as the mineralogical nature of the aggregate, mixture granulometry, porosity and surface texture, type of binder and metal oxide pigment additives used, which have been found to favourably influence the reflectance of the entire solar radiation spectrum, UV-VIS-IR, i.e., not only in the visible region, on which the colour and tonality of the road surfaces will largely depend, but also and very particularly in the infrared IR region, which represents 52 % of the solar energy incident on the earth's surface; hence the high reflectance values achieved.

In the development process, the materials and structural characteristics of the bituminous mixtures have been first examined in the laboratory in order to define the design criteria that allow achieving the target SR levels, and then define the working formulas of the ideal reflective mixtures, by means of the manufacture of standardized pavements, and study their behaviour and functionality in the short and medium term.

As preferred claimed embodiments of the invention, AC16 D mixtures with high reflective capacity, BBTM 5A or BBTM 8A thin-wearing-layer mixtures have been developed, in order to compensate for the extra cost that involves the implantation of these new pavements, and reflective pavements with antislip properties. The possibility of including material from the milling of recycled asphalt pavement (RAP) in the mixtures has also been contemplated, and although the target reflectance level has not been reached for this type of recycled pavements, its reflective capacity has been improved.

With these new reflective pavements, the heating of city and urban area surfaces is reduced, and consequently the ambient temperature, mainly in summer, thereby mitigating the urban heat island effect, which implies benefits such as energy savings in air conditioning and public lighting consumption, improving air quality, and the comfort and health for pedestrians.

TECHNICAL FIELD. -

The technical field of the present invention is the construction or coating of pavements for streets and highways based on asphalt, that is, with wearing layers made of bituminous mixtures.

STATE OF THE ART.-

The change of life of the population from living in rural areas to urban areas has caused a proliferation of large cities, in which there is a phenomenon known as "Urban Heat Island - UHI", defined as the difference in thermal gradient between developed and undeveloped areas. This phenomenon occurs when the urban area is significantly warmer than the surrounding areas, which is due to the fact that generally green and humid rural surfaces have been replaced by other surfaces that are made of materials with a high thermal capacity and low solar reflectance such as asphalt, concrete, roof tiles, brick, dark waterproofing membranes, etc., capable of absorbing and storing energy in the form of heat, producing a heating of the surrounding air, with a temperature increase around 4°C. This fact, in addition to other factors, creates an overheating effect in the urban area.

Urban heat islands can adversely affect the community, with harmful effects on air quality, human health and energy consumption.

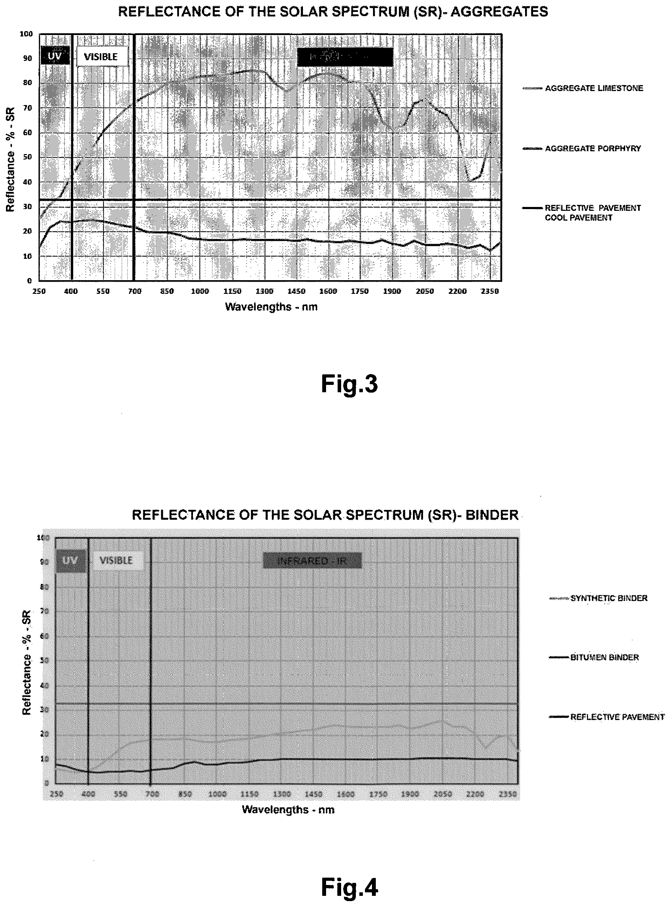

Traditional pavements in cities, which represent about one third of urban surfaces, are heated by the sun (see Figure 3) and absorb between 80 and 95% of the incident solar energy. In the middle of summer, a bituminous mixture pavement can reach 70°C on the surface. These pavements aggravate the urban heat island effect by heating the air locally. The heat absorbed, by convection, would pass into the atmosphere, heating the air and therefore increasing the ambient temperature, with this increase being more noticeable in the afternoon-evening hours.

In order to reduce this overheating of road surfaces in urban areas, and consequently mitigate the urban heat island effect, different techniques are known to increase the solar reflectance "SR" or albedo of the pavements, that is, the capacity of the pavement surface to reflect sunlight, based on the principle that the higher the SR of the pavement surface, the greater the cooling and lower the surface temperature, and the lower the ambient temperature.

This is the case, for example, of coloured concrete tiles with reflective paints recently introduced in different cities in Greece, or the multi-coloured concrete pavements with reflective paints being developed in Tirana (Albania).

Some of these techniques are patented, such as the Japanese patents with publication numbers JP2004218301 and JP2005061042, which concern layers of paints containing a pigment of high solar radiation reflectance arranged on the body surface of the pavement, or the Japanese patent JP2012087502, concerning a pavement made on an already paved surface, comprised of a first layer of thermal insulation with an aggregates and binder base, and a top layer capable of reflecting sunlight. The Chinese patent CN202509360, proposes a highly reflective glossy asphalt pavement made on a pre-existing bituminous asphalt pavement structure, pressure-compacting a layer of highly reflective aggregate that is embedded in the asphalt surface layer, and the American patent US2010247753, for an invention that improves pavement reflectivity by coating the surface with a resin base as a binder and at least one dark pigment that has an significant reflectivity of solar radiation reflectance.

In all cases, these techniques for achieving reflective pavements, normally based on layers of paints and various coatings, are applied to pre-existing or recently installed pavements, in other words, they do not influence the type and composition of the asphalt mixtures of the initial pavements, which represents a significant additional cost in the conditioning of streets and roads.

An alternative would be to pave the roads with pavements with intrinsic solar reflectance capacity that, due to certain physicochemical parameters with reflective properties that determine the type and composition of the asphalt mixtures that the pavements consist of, such as a certain colouring of the binder, reflect the solar energy that is present during the day to a greater extent than conventional pavements, keeping the surface temperature lower and further reducing the ambient temperature.

Another prior art can be found in a document of GRAU et al.: "Pavimentos reflectantes para la mitigation del cambio climatico", Estudio teorico y de laboratorio. ASFALTO y pavimentación, vol. VIII, no. 28 26 March 2018 (2018-03-26), pages 71-13, XP055771065.

In the state of the art there are some relevant publications of this type of pavement, such as the European patent with publication number in Spain ES2196277-T3 for a " Accessible binding layer and method for producing it", which consists of a pavement made up of a primary layer of a bonding agent and an aqueous protection layer over it, which comprises one or more opaque constituents capable of reflecting light radiation, chosen from a thickener, a mineral load and an organic load; or the also European patent ES2605729-T3, for a "Pigmented asphalt binder composition", characterised by a mixture of light-coloured aggregates, including limestone, a petroleum asphalt cement (PAC) based pigmented asphalt binder, various tar removal and/or vacuum residues, inorganic pigments, which may be TiO2, and optionally a filler, selected among hydrated lime and/or Portland cement, to achieve coloured and decorative pavement while maintaining light reflection at levels similar to those of usual rigid pavements.

It is also worth mentioning the international patent application of origin JP WO2016163346-A1 for a heat-insulating pavement made up of a base layer of asphalt or concrete and a layer of aggregate on top of it with an allocation of white particles that have an improved heat-insulating effect compared to conventional aggregate particles, which are of a different composition; and the Korean patent KR20150062330-A, referring to a solar reflective coloured coating material for building an environmentally friendly road surface by spraying an oil resin when a coating layer is formed after the silica is sprayed.

All these patented solutions for pavements with a greater capacity to reflect solar radiation are based on compositions that only provide a certain colouring to the mixtures, normally in light tones, using light coloured aggregates, pigmented asphalt binders, allocations of white particles, etc., which improve the reflective properties against radiation in the visible spectrum, and without quantifying to what extent the solar reflectance is increased in relation to conventional pavements. These are solutions more so for the beautification of road surfaces, which simultaneously reduce the surface temperature.

The solar reflectance "SR" of a surface is defined as the fraction or portion of the incident solar radiation that is reflected by that surface; that is, by the ratio:

$$SR = reflected\ solar\ energy\ /\ incident\ solar\ energy$$

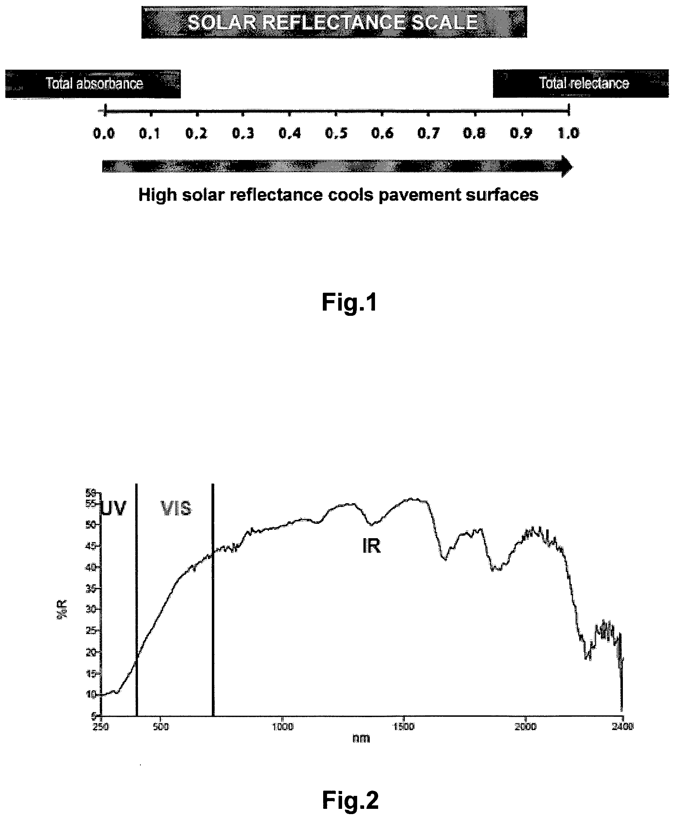

The value ranges from 0 for non-reflective surfaces to 1 for fully reflective surfaces. See **Figure 1** for a representation of this SR scale, in which the values can also be given as a percentage, and which also serves to quantify absorbance, which is the concept opposite to reflectance.

The radiation that reaches the Earth, which is translated into the incident solar energy, ranges from 300 to 2500nm, the rest being rejected by the atmosphere. This wavelength range is divided into three electromagnetic spectra:

- Ultraviolet Spectrum UV: Wavelengths between 300-400nm
- Visible Spectrum VIS: Wavelengths between 400-700nm.
- Infrared Spectrum IR: Wavelengths between 700-2500nm.

Approximately 5% of the energy (solar radiation) reaching the earth's surface is in the ultraviolet (UV) spectrum, 43% in the visible spectrum (VIS) and 52% in the infrared (IR).

As the solar spectrum is composed of UV, VIS and IR spectra, it is possible to determine within the total solar reflectance of a surface, the part reflected in the ultraviolet spectrum UVR, in the visible spectrum VISR, which is the one that depends on the colour of the surface, and in the infrared IRR.

This means that the solar reflectance SR of an asphalt surface will depend on 43% of the tonality or colour of the mixture, which corresponds to the part reflected in the visible spectrum VISR, while the rest, UVR and IRR, will depend on the remaining of the physicochemical properties of the type and composition of the pavements.

Therefore, in order to achieve asphalt pavements with the maximum solar reflectance SR, which is the objective of the present invention, design criteria of the mixtures must be defined so that they reflect the maximum possible energy from the whole spectrum of solar radiation, UV-VIS-IR.

Once this guideline has been established, the problem arises of determining the SR values that are admissible for the final aim being pursued, which is that the pavements developed can be considered to have sufficient SR values as to contribute to minimising the effect of urban heat islands in cities, since in Spain at present there are no specific regulations on the characteristics that the surfaces must have in order to be catalogued as having high solar reflectance, and thus being necessary to resort to international regulations.

The LEED v4- ND Certification system sponsored by the US Green Building Council for the Development of Residential Areas, in the chapter GIB CREDIT: HEAT ISLAND REDUCTION, marks the measures that are to be adopted concerning the horizontal surfaces of the pavements in order to minimize the effects of such development on microclimates, human habitats and wildlife, reducing the effect of urban heat islands.

According to the requirements established by this Certification system, a material is considered to be reflective if a solar reflectance value SR of at least 28% (0.28) is reached after three years of its installation; for new materials, those with an SR of at least 33% (0.33) will be used. Therefore, the solar reflectance value SR of 33% will serve as a reference for the design of the target reflective mixtures.

The design criteria that have been studied are physicochemical parameters characteristic of asphalt mixtures set out in the General Technical Specifications for Roads and Bridges "PG-3" and in the specific regulations, which can have a favourable influence on Solar Reflectance-SR, and in turn on the surface temperature when exposed to the sun. These are parameters relating to the type and composition of the mixtures, such as the nature of the aggregates, binder and additives, on which the reflectance in the visible spectrum will depend to a large extent, but also on structural and geometric characteristics, such as granulometry, porosity and surface texture, which will affect UV and IR reflectance.

ABSTRACT OF THE INVENTION. -

The asphalt pavements having high solar reflectance or albedo disclosed in the invention, are the result of said experimental study of physicochemical parameters that determine the type and composition of the mixtures, carried out in the laboratory and subsequent manufacturing in a pilot plant of samples to be tested, to achieve an SR index equal to or greater than 33 % in accordance with LEED v4 BD + C certification, which is the one required by said certification to be classified as reflective surfaces.

These pavements have been developed for the two types of hot bituminous mixtures that are commonly used as asphalt wearing layers on streets and highways: bituminous concrete AC-type mixtures, according to UNE-EN 13108-1, and discontinuous BBTM-type mixtures in accordance with UNE-EN 13108-2, being the physicochemical parameters used as design criteria, the following:

- Limestone aggregates for coarse and fine
- Smaller maximum size of coarse aggregate;
- Pigmentable synthetic binder, light or colourless;
- White titanium oxides, red iron oxides and/or yellow iron oxides as additives;
- Dense/semi-dense granulometry; type D or S for AC mixtures, or type A or B for discontinuous BBTM mixtures;
- Less number of holes
- Less surface texture (low *macroextrutura*);

For AC mixtures with a maximum aggregate size of 16 mm, white titanium dioxide ($TiO_2$) as an additive, granulometry type D, and a maximum number of holes of 7 %, an SR index of around 50 % has been achieved, so that, in a preferred embodiment, AC16 SURF D-type mixtures type, with pigmentable synthetic binder and $TiO_2$ as an additive, are proposed in a minimum binder allowance of 5.5 % by mass over the total of the mixture.

For discontinuous BBTM mixtures, with a maximum aggregate size of 8 mm, white titanium dioxide ($TiO_2$) as an additive, granulometry type A, and a maximum number of holes of 16 %, an SR index of around 42 % has been achieved, which is also a very good result, so that, according to the PG-3 pavement catalogue, it is proposed as preferred embodiments for thin-wearing-layer mixtures, BBTM 5A or BBTM 8A mixtures, with pigmentable synthetic binder and $TiO_2$ as additive, in a minimum binder allowance of 5.75 % by mass over the total mixture.

With the aim of non-slip properties of these reflective pavements, coarse limestone aggregates can be substituted for porphyry aggregates of similar granulometry in the aggregates of limestone aggregates, keeping the SR index above the required level.

Another material that can be used in the development of these reflective mixtures is recycled material, from the milling of asphalt pavements (RAP), although in this case the target reflectance levels are not achieved, so this material must be used in low proportions and with the purpose of a simple improvement of the reflective properties.

Improved asphalt pavements against solar reflectance are proposed for AC and BBTM mixtures of the type and composition as the previous ones, composed of a rate of recycled material from the milling of AC16 SURF S-type asphalt pavement (RAP), up to a 25 %.

The advantages when mitigating the urban heat island effect with the implementation of the developed high solar reflectance pavements - SR, are the following:

- Energy savings in air conditioning. By lowering the ambient temperature, air conditioning consumption will be reduced in buildings adjacent to areas with high reflectance pavements.

- Energy savings in public lighting consumption. High reflectance pavements have light tones and are high luminance surfaces, therefore they cause good reflection of incident light. This property means that less intensity of artificial night light is necessary to obtain good visual perception, therefore these pavements can contribute to savings in the consumption of electrical energy in public lighting.

- Improvement of air quality. Warmer air accelerates the formation of tropospheric smog-ozone from atmospheric pollutants such as nitrogen oxides (NOx) and volatile organic compounds (VOCs). As the ambient temperature decreases due to the action of reflective pavements, these photochemical reactions tend to slow down.

- Improved comfort and health of pedestrians. Lower ambient temperatures reduce heat stress, together with improving air quality can help improve diseases directly related to heat (dehydration, cramps, heat stroke, heat syncope...) and related to the respiratory tract (such as asthma or COPD), arrhythmias, etc.

FIGURES and DIAGRAMS. -

At the end of this specification, the following figures and graphs of results of the successive tests carried out in the design and development of the new reflective pavements are included, which are referred to in the embodiment section:

- **Figure 1:** Representation of the solar reflectance "SR" scale.

- **Figure 2:** Solar spectrum reflectance graph (250-2.400 nm)

- **Figure 3:** Solar spectrum reflectance graph for the two types of aggregate proposed: limestone and porphyry aggregate

- **Figure 4:** Solar spectrum reflectance graph for the two types of binders tested: 35/50 bitumen binder and synthetic binder.

- **Figure 5:** Solar spectrum reflectance graph for mixtures with 35/50 black bitumen and different types of pigments.

- **Figure 6 and 7:** Solar spectrum reflectance graphs for mixtures with synthetic binders and different types of pigments.

- **Figure 8:** Representation of the reflection mechanism of solar radiation on an asphalt pavement: (A) smooth AC surface; (b) rough BBTM-11A surface and (c) porous BBTM-11B surface.

- **Figures 9 and 10:** Graphs of evolution curves of the surface temperature to the exposure of solar radiation for different bituminous mixtures.

- **Figure 11:** Grading spindle for a AC16 D working formula.

- **Figure 12:** Graph of surface temperature evolution curves to the exposure of solar radiation for BBTM-11B and AC16 D mixtures

- **Figure 13:** Graph of maximum temperatures reached by the BBTM-11B and AC16 D mixtures

- **Figure 14:** Graph of maximum decreases in temperatures reached by these mixtures.

- **Figure 15:** Simulation graph of the decrease in surface temperature with the increase in SR compared to a conventional pavement.

- **Figure 16:** Graph of surface temperature evolution curves for AC16 D mixtures.

- **Figure 17:** Correlation graph between SR and the length of service of the pavement.

- **Figure 18 and 19:** Bar graph of maximum surface temperatures for different types of mixtures.

- **Figure 20:** Grading spindle for a BBTM 5A working formula.

- **Figure 21:** Solar spectrum reflectance for reflective pavement, conventional pavement and snow.

MANNER OF EXECUTION.-

The development process of the new reflective pavements has been carried out in two phases or tasks: In a first phase (1), research was carried out in the laboratory on the materials and structural characteristics of standardised asphalt mixtures that improve their reflective capacity to target levels, measuring SR in various samples by means of spectrophotometer and other test methods, in order to define the design criteria in terms of type and composition of the ideal mixtures; and, in a second (2), the working formulas of the suitable reflective mixtures have been defined based on the design considerations obtained through the manufacture of standardised pavements, and their behaviour and functionality in the short and medium term have been studied.

Within these aforementioned suitable reflective mixtures, asphalt mixtures with antislip properties have been developed and tested as a particular pavement product, replacing limestone aggregates with porphyry, and asphalt mixtures for thin road surfaces. The inclusion of material coming from milled RAP in the mixtures in a rate up to 25% has also been contemplated.

**1. Research into the type and composition of suitable mixtures.-**

An asphalt mix is mainly composed of a binder, aggregates, additives to improve performance or desirable characteristic, and occasionally, a percentage of milled recycled material from asphalt pavements (RAP) from roads.

In this first investigation, the characterisation of aggregates, material from milled RAP, binders, and metal oxide pigments used as additives has been studied with regard to the reflective capacity of both the visible and the infrared spectrum, as well as the way in which it contributes to improving the texture and porosity parameters of the mixtures.

The characterisation of the component materials of the asphalt mixtures and their structural parameters has been performed on the basis of the General Technical Specifications for Roads and Bridges - PG-3, by measuring the solar reflectance through different methods, which has made it possible to know a priori the ideal type and composition of the reflective mixtures to be developed.

**1.1. Methods used to measure solar reflectance "SR".-**

Two test methods have been used to measure reflectance in the materials and mixtures developed: In one, a spectrophotometer has been used, which measures reflectance in laboratory samples, and in the other, a pyranometer, to measure the solar reflectance in already constructed pavement surfaces.

Spectrophotometer.-

A UV-VIS-IR spectrophotometer, with an integration sphere in accordance with the ASTM E 903-12 standard, has been used to measure solar reflectance on flat surfaces. It is the ideal method for small laboratory samples, 5 x 5 cm in size, but it is not suitable for measuring reflectance on field surfaces. The measurement range is between 300 and 2500nm wavelengths.

A standard solar spectrum has been established in the ASTM G173 AM 1.5 G standard, which shows the spectral values of solar irradiation in $W/m^2.nm$ at each wavelength, which makes it possible to obtain the value of solar reflectance expressed in % and in terms of one. The values of reflectance in each wavelength value can be represented graphically to observe reflectance in each of the three spectra: UV, VIS and IR. The graph in **figure 2** shows reflectance in the 250-2400nm spectrum.

Pyranometer.-

Solar reflectance is defined as the solar radiation reflected by a surface divided by the incident solar radiation upon it. Therefore, solar reflectance can be calculated from the measurement of the intensity of solar radiation, both incident and that which is reflected by a surface, at a given time.

The ASTM E1918 (ASTM 2006) standard describes a test method for measuring solar reflectance for surfaces in the field using a pyranometer (see photos 3 and 4). Areas such as circles with at least four metres in diameter or squares measuring at least four metres on each side, and with a slight gradient, are required. It measures both incident and reflected energy in $W/m^2$.

### 1.2. Design criteria.-

As said, the objective is to achieve asphalt pavements that reflect the maximum possible energy from the entire UV-VIS-IR solar spectrum. The reflection of the visible spectrum, which represents 43%, will depend on the tonality or color, and the rest, UV and IR, will depend on the physicochemical characteristics of the components that make up the pavements.

The design criteria that have been studied are characteristic parameters of asphalt mixtures that can influence the Solar Reflectance-SR and in turn the surface temperature when solar radiation is present; namely

- Mineralogical nature of the aggregate: Limestone and porphyry.
- Milled RAP material.
- Type of binder: Conventional black asphalt bitumen, and clear synthetic binder.
- Additions of Fe, Cr and Ti metal oxide pigments.
- Mixture particle size: Continuous and discontinuous.
- Porosity.
- Surface texture: Maximum size of the aggregate.

### 1.2.1. Aggregates.-

In asphalt mixtures, aggregates represent 95% of the total mixture, therefore, their photocolourimetric characteristics will be decisive in obtaining a highly reflective mixture.

A priori, light coloured aggregates are going to be more suitable than dark coloured aggregates, but with the measurement of the colour we will only have information on the reflectance of the visible spectrum, which is 43% of the total solar spectrum, so it is important to obtain information on the reflectance of the whole solar spectrum.

Two types of aggregates have been selected for comparison of their solar reflectance across the spectrum, in accordance with the requirements set out in PG3 for bituminous roadbase mixes:

- Limestone aggregate, "calcite" of mineralogical origin, from the Santa Rita VI - Starmis quarry, located in Paraje de la Balonga, municipality of Abanilla (Murcia).

- Porphyry aggregate, "ofite" of mineralogical origin, widely used for its accelerated polishing coefficient (CPA).

The solar reflectance of these selected aggregates has been measured in a first test with a pyranometer, following the procedure of the ASTM E1918 standard, by means of which values of the incident and reflected energy placed at a determined height are taken. The ratio between the two data is the SR of the material to be tested.

By means of UV-VIS-IR spectrophotometry it is possible to obtain the value of the reflectance of the solar spectrum, as well as the UV-VIS-IR spectra separately, taking into account that the wavelengths between 250 - 400nm are those corresponding to the Ultraviolet-UV spectrum; between 400 - 700nm are those corresponding to the Visible-VIS spectrum; and between 700 - 2500nm are those corresponding to the Infrared-IR spectrum.

Following the procedure described in the ASTM E903 - 12 standard and using the standardised relative spectral distribution of global solar radiation referred to in the ASTM G173 - 03(2012) standard, we obtain the solar reflectance of the two aggregates.

With the resulting values we have made a graphic representation as shown in **Figure 3,** which shows how the reflectances are in the different spectra of the two types of aggregate: limestone and porphyry.

The reflectance results obtained by the two test methods are summarized in **Table 1:**

TABLE 1

| Testing method | Solar Reflectance - SR | | |
|---|---|---|---|
| | Limestone aggregate | Porphyry aggregate | Project goal |
| Spectrometer ASTM E903-12 | 62 | 20 | 33 |
| Pyranometer ASTME1918 | 58 | 18 | |

The results obtained by the two methods reveal that limestone aggregates, with an SR between 58-62, are optimal for the manufacture of reflective mixtures, but porphyries, with an SR value between 18-20, a priori, manufacturing mixtures with them, do not give optimal results in terms of reflectance.

It is also observed that the results obtained by the two methods are equivalent, which is important for validating the design process of the mixtures in the laboratory, since the values obtained in the laboratory can be extrapolated to the mixtures manufactured and spread.

**1.2.2. Material from milling RAP.-**

Another material that will be studied to determine its usefulness in the development of reflective mixtures is the recycling material from milling asphalt pavements (RAP).

To this end, samples have been taken from a milling operation carried out in the south-east of Spain, specifically on the Monteagudo-Abanilla road in the Region of Murcia. The milled mix corresponds to an AC16 SURF S type.

Reflectance measurements have been carried out by means of spectrophotometry and colorimetry, obtaining the results shown in **Table 2:**

TABLE 2

| % REFLECTANCE | Spectrophotometry ASTM E903-12 | Colourimetry UNE-EN 11664 | PROJECT GOAL |
|---|---|---|---|
| ULTRAVIOLET | 7 | | |
| VISIBLE | 5 | 8 | |
| INFRARED | 11 | | |
| SOLAR REFLECTANCE - SR | 9 | | 33 |

SR values are well below the project's target. The rate of recycled material from milled asphalt (RAP) that can be used for the development of reflective mixes is expected to be low, no more than 25%.

**1.2.3. Binders.-**

For reflective mixes, a synthetic binder has been selected which gives the reflective mixes a lower dark colour, but without impairing the mechanical performance required for use on urban road surfaces.

This synthetic binder is made up of a mixture of resins, oils, polymers and Fischer-Tropsch waxes. Each component confers a specific characteristic that will instil certain performance into the mixes. The resins increase adhesion, the oils give the binder dispersing effects, the polymers elasticity and strength, and the waxes modify viscosity.

The characterization has been carried out taking into account the tests reflected in PG3 Articles 211 (paving stones), 212 (polymer-modified bitumens).

The characterisation of both penetration (35/50) and polymer modified PMB 45/80-65 bitumens used in conventional asphalt mixes was also carried out, as they are to be used in the manufacture of the control mixes to be compared with the reflective mixes developed.

The values resulting from the characterisation tests of these binders are shown in **Table 3:**

TABLE 3

| CHARACTERIZATION | UNIT | STANDARD | BINDER | | |
|---|---|---|---|---|---|
| | | | 35/50 | PMB 45/80-65 | SYNTHETIC BINDER |
| Penetration determination | 1/10mm | EN 1426 | 39 | 55 | 46 |
| Softening point | °C | EN 1427 | 53,7 | 75 | 70 |
| Penetration rate | | EN 12591 anex A | -0,9 | 3,9 | 2,6 |
| Frass Fragility | °C | EN 12593 | -6 | -16 | -8 |
| Elastic recovery | °C | NLT-329 | | 82 | 64 |
| Mixing temperature | °C | | 150-160 | 160-170 | 150-160 |

As with the aggregates, the spectrophotometric study has also been carried out on the binders by the ASTM E903-12 standard test, obtaining the values and graphs of solar reflectance-SR shown in **Table 4 and Figure 4.**

With these results, it will be necessary to use a light-coloured synthetic binder to obtain the solar reflectance target.

TABLE 4

| Test method | Solar Reflectance - SR | | |
|---|---|---|---|
| | Bitumen 35/50 | Synthetic binder | Project goal |
| Spectrometer ASTM E903-12 | 8 | 17 | 33 |

### 1.2.4. Additions of metal oxide pigments.-

The addition of metallic oxide pigments in asphalt mixtures will help to achieve clear shades to obtain good reflectance of the visible spectrum, but they can also help to increase the reflectance of IR due to their physical-chemical characteristics.

The pigments studied are those commonly used in construction:

- Yellow and red iron oxides
- Green chrome oxide.
- White titanium oxide.
- Overseas blue. Complex silicate polysulphide.

In order to check how the pigments act on the solar reflectance in an asphalt mix, samples have been made in the laboratory with fine limestone aggregate, binder and the different types of pigments, and then the reflectance values of the three UV-VIS-IR spectra have been obtained by means of the spectrophotometer (ASTM E903-12).

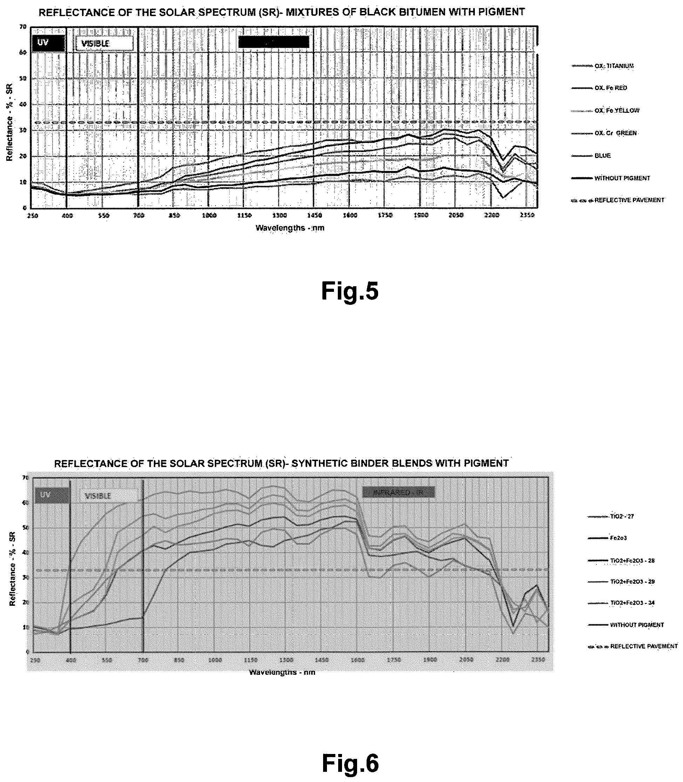

Firstly, 35/50 black bitumen was used as a binder, and samples were taken of all the selected pigments. The results obtained are shown in **Table 5 and Figure 5.**

TABLE 5

| MATERIAL | BITUMEN-BINDER | PIGMENT % | UV | VIS | IR | SR |
|---|---|---|---|---|---|---|
| Limestone aggregate slab 0,063/1 mm | Bitumen 35/50 | without pigment | 7 | 5 | 11 | 8 |
| | | Yellow Fe Ox. 3% | 7 | 6 | 15 | 11 |
| | | Red Fe Ox. 3% | 8 | 6 | 21 | 14 |
| | | Ultramarine Blue 3% | 9 | 6 | 9 | 8 |
| | | Chrome Ox. 3% | 7 | 6 | 19 | 13 |
| | | Titanium Ox. 3% | 7 | 8 | 22 | 15 |

It can be seen that some metal oxide pigments can increase the IR reflectance by more than 80%, with red iron oxides and titanium oxides behaving best, in the latter the increase in the reflectance of the visible is also representative. In any case, with the use in asphalt mixtures of black bituminous binder and the pigments studied, it is not possible to obtain a solar SR reflectance greater than or equal to the 33% (0.3) objective.

Different samples were then made using clear synthetic binder with the same limestone aggregate. The pigments used were red iron oxide and titanium oxide, since they are the ones that will perform best for the target. The percentages of pigment have been much lower than those used with black bitumen.

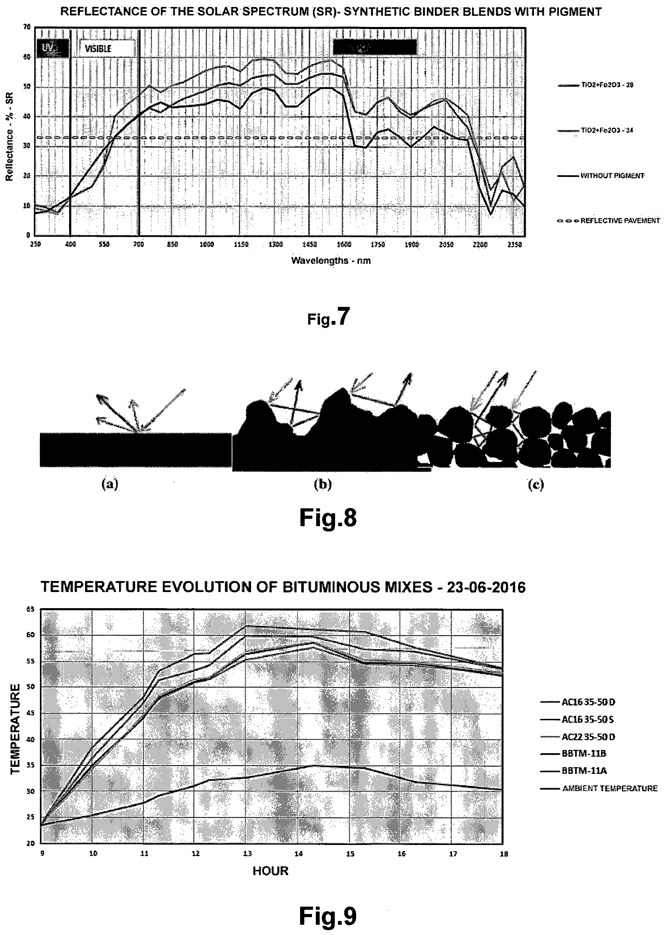

The reflectance values of the three UVVIS-IR spectra have been obtained by means of the spectrophotometer (ASTM E903-12). See **Table 6** and graphs in **Figure 6 and 7.**

TABLE6

| Reference | 3 | 27 | 23 | 28 | 29 | 34 |
|---|---|---|---|---|---|---|
| Material | Limestone aggregate slab 0,063/1 mm | | | | | |
| Bitumen-binder | Synthetic binder | | | | | |
| Pigment % | without pigment | Titanium Ox. x% | Red Fe Ox. x% | (Titanium Ox. + Fe Ox.) x% | | |
| Reflect. Uv | 9 | 8 | 8 | 9 | 8 | 9 |
| Reflect. Vis | 28 | 52 | 12 | 25 | 36 | 28 |
| Reflect. Ir | 37 | 53 | 38 | 43 | 48 | 46 |
| Reflect. Sr | 32 | 51 | 25 | 34 | 41 | 37 |

The results show that the reflectances of the IR spectrum in the samples with pigments are higher than in the sample without pigment, even though this sample has the same or higher values of reflectance of the visible spectrum. For example, the sample without pigment 3 and the sample with pigments 34 have the same visible reflectance, they are equal to human vision, therefore on the basis of the shade alone they would have the same solar reflectance; however sample 34 has more reflectance in the IR (which is invisible), giving in the final calculation a higher solar reflectance than the non-pigmented sample. The sample (28) has lower visible reflectance than the non-pigmented sample 3 but the total reflectance is higher in sample 28 because the infrared reflectance has increased.

This experiment shows that the addition of some metal oxide pigments can increase the reflectance of the infrared spectrum, making the surface more reflective to the solar energy where the pigment has been added.

Therefore, it can be concluded that, a priori, to obtain an asphalt mixture with a solar reflectance of more than 33%, a synthetic binder pigmented with titanium oxide should be used, and that the light shade obtained with the $TiO_2$ pigment can be nuanced with a small percentage of iron oxide by lowering the reflectance of the visible without greatly reducing the solar reflectance.

### 1.2.5. Texture and porosity.-

It is already known what type of materials we should use to achieve the solar reflectance marked as an objective, according to the spectrophotometric values that these materials have. But there is also a geometric characteristic of the surfaces that will influence the thermal behaviour of the incident solar radiation, and this is how this radiation is reflected.

The reflection of the electromagnetic waves from the sun on a surface can be of two different types: (1) Specular reflection, where light is reflected on a surface like a mirror. These surfaces are normally polished; and (2) Diffuse reflection, where light is reflected off a rough surface and the rays are bounced off in all directions. The shape and the path of propagation of the solar energy will influence the heating of the surface; the more the waves bounce the more the surface will heat up, therefore depending on the type of reflection the heating of the surfaces can be different.

**Figure 8** shows the detail of the reflection of the incident solar radiation and how it reflects and bounces off the surfaces, causing the aggregates to heat up, for three types of surface: (a) smooth - AC; (b) rough - BBTM-11A; and (c) porous - BBTM-11 B.

Within the catalogue of road surfaces for wearing course there are types of mixtures that are more or less rough, with more or less voids, and these voids with more or less tortuosity.

To check how these characteristics influence the surface temperature, samples of various mixes with asphalt bitumens and similar solar reflectances (SR values between 7-8 % (0.07-0.08)) and different granulometries, voids and macrotexture have been exposed to the action of solar radiation. As they are all made with black bitumens and are expected to have the same solar reflectance, any difference in surface temperature when exposed to solar radiation will be due to another characteristic.

The asphalt mixtures and their characteristics that have been studied are as follows:

- BBTM 11B. Discontinuous granulometry, high roughness and high voids value
- BBTM 11A. Discontinuous grain size, high roughness and few holes
- AC16 SURF S. Semi-dense grain size, low roughness and few gaps
- AC22 BIN S. Semi-dense grain size, low roughness and high void value
- AC16 SURF D. Dense grain size, low roughness and few gaps

**Table 7** shows the values of reflectance, porosity and roughness of each of the mixtures to be tested, with similar solar reflectance for all of them.

TABLE 7

| Reff. | Type of mixture | Solar Reflectance SR | % Porosity | Macrotexture MPT |
|-------|-----------------|----------------------|------------|------------------|
| 1 | BBTM-11B | 8 | 16 | 2,4 |
| 2 | BBTM-11A | 8 | 5,2 | 1,6 |
| 3 | AC16-S | 7 | 5,1 | 0,8 |
| 4 | AC22-D | 8 | 7,3 | 0,8 |
| 5 | AC16-D | 7 | 4,8 | 0,7 |

The exhibition (see Photo 7) was held on a clear day with a maximum solar radiation of 890 w/m$^2$. Hourly temperature values were obtained from 9 am to 6 pm. The temperature measurements were made by taking images of the entire surface of each sample with a thermographic camera (see photo 8) which, by means of a computer program, calculates the maximum, minimum and average temperature of that surface. This is the method that has been used to measure surface temperatures throughout the study.

The graph in **Figure 9** shows the evolution of the surface temperature to the exposure of solar radiation

Depending on the average temperature values of each surface obtained from the samples exposed, there can be a difference of 5 °C between the hottest mixture (BBTM-11B) and the coldest (AC16 D), observing that a surface of a bituminous mixture with the minimum voids, dense granulometry, low macrotexture and reduced maximum size of aggregates, helps to maintain the lowest surface temperature.

It has been seen that porosity and macrotexture influence the heating of a surface, but it is also important to know how these parameters influence the cooling process, i.e. the evolution of the surface temperature when exposed to solar radiation. It is particularly interesting to know whether the differences in temperature between two surfaces when they are heated are maintained when they are cooled.

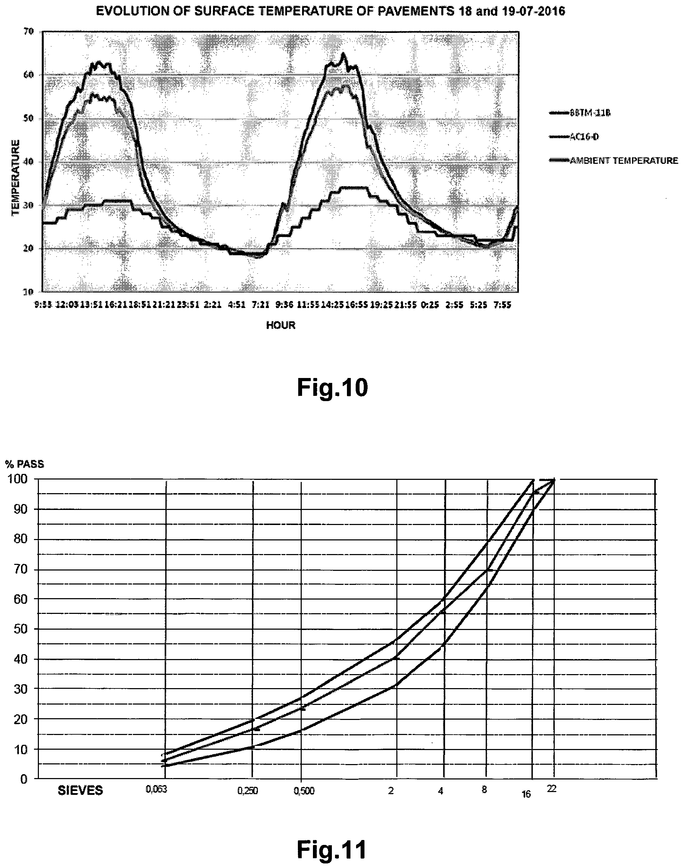

For this purpose, 30x40 cm samples of BBTM-11B and AC16 D mixture were submitted to the weather for 48 hours, as well as contact thermographic probes to take temperature data every 15 minutes and the data were stored in a Datalogger. The data obtained are shown in the graph in **Figure 10.**

It can be seen that the cooling speed is similar in the two mixtures, which means that the macro-extract and porosity do not influence the cooling speed. It is also observed that the AC16-D type mixture remains cooler during the whole heating and cooling process. This means that the reflective surfaces are acting throughout the solar cycle by lowering the surface temperature.

### 1.3. Conclusions.-

After the research process carried out, the conclusions obtained on the most favourable design criteria for AC and BBTM type asphalt mixtures with high solar reflectance properties are as follows:

- Mixtures with limestone aggregates are more reflective than mixtures with porphyry aggregate.

- The mixtures with continuous granulometry (AC type D and S) are more reflective than the mixtures with discontinuous granulometry (BBTM type A and B), being the cooling speed similar.

- The smaller maximum size of the aggregates is more favourable for the reflectance than a larger size. Maximum size: 16 (AC); 8 (BBTM)

- The fewer holes in the mixture, the more reflective it is.

- The use of clear synthetic binder is necessary to obtain reflective pavements.

- By adding some metal oxide pigments, the IR reflectance is increased by 80% compared to the control sample, with virtually no change in the visible reflectance.

- The pigments that work best are titanium oxides (white), preferably TiO2, and red and yellow iron oxides. A higher percentage of the pigment used can have a positive influence.

- By using synthetic binders and TiO2, asphalt mixtures such as AC or BBTM with SR values of around 50% can be achieved.

**Table 8** summarises the most favourable and unfavourable criteria for designing a mix that will have, a priori, properties of high solar reflectance, and thus achieve the lowest possible surface temperature. These criteria are the type of binder, of aggregates, type of mixture, granulometry and maximum size of aggregate.

TABLE 8

| Trend | Binder | Aggregates | Mixture type | Granulometry | Max. Size |
|---|---|---|---|---|---|
| Favourable | Synthetic binder | Clear | AC BBTM | D A | <16mm <8mm |
| Unfavourable | Black Bitumen | Porphyry | BBTM; PA | 5 (AC); B (BBTM) | 22 (AC); 11 (BBTM) |

In conclusion: Mixtures with clear aggregates, continuous granulometry, few voids and smaller aggregate size are more reflective. If synthetic binder and $TiO_2$ are added to this, we obtain reflective pavements with an SR of 50.

**2. Defining the working formulas of the ideal mixtures; study of their behaviour and functionality.-**

With respect to the design criteria defined for the type and composition of high reflectance mixtures, hot mix asphalt with an optimised SR index has been developed for different applications, verifying the expected properties by studying their behaviour and functionality.
In the defining of the manufacturing protocol for these mixtures, compliance with the corresponding regulations has been validated by carrying out various laboratory tests.

**2.1. Reflective asphalt mixtures.-**

Standardised asphalt mixtures have been manufactured in the laboratory taking into account the design considerations indicated in the previous sections. Samples have been taken from the produced material to check the solar reflectance obtained, as well as its thermal behaviour in the face of solar radiation.
For the preparation of the different samples both thick and fine limestone aggregates have been used. Both types of binder, 35/50 bitumen and synthetic binder, have been used, as well as mixtures with and without pigment. Mixtures with synthetic binder, titanium oxide and 10% RAP have also been made to test behavior of the addition of recycled material. All the mixtures have been type AC16 SURF D, except BBTM11 B for reference.
The percentages of aggregates and binder have been for all the same mixtures. **Table 9** shows the working formula for AC16 D, in percentages of aggregates/binder, and **Figure 11** shows the grading spindle.
A laboratory mixer has been used to manufacture the samples according to the UNE-EN 12697-35 standard.

TABLE 9

| MATERIAL | FRACTION | PERCENTAGE - % |
|---|---|---|
| Aggregate Limestone | 12/20 | 32 |
| Aggregate Limestone | 6/12 | 34 |
| Aggregate Limestone | 0/4 | 24 |
| Aggregate Limestone | Filler | 5 |
| Binder / Mixture | | 5,0 |

The synthetic binder used has been dosed directly into the mixer. The mineral powder/binder weight ratio must not exceed 1.1, with any pigment used being counted as a mineral powder. The amount of binder used was 5.0% by mass of the total mixture. The pigment dosage ranges from 1.0 to 2.0% by mass of the total mixture.

### 2.1.1. Thermal behaviour in the presence of solar radiation.-

In order to be able to check the behaviour of the samples when exposed to solar radiation and to measure the solar reflectances, rectangular samples have been manufactured with a roller compactor in accordance with the UNE-EN 12697-33 standard as well as cylindrical samples with an impact compactor in accordance with the UNE-EN 12697-30 standard.

**Table 10** shows the solar spectrum reflectance values obtained using a spectrophotometer in accordance with the ASTM E903-12 standard.

It is noted that the only mixture that would meet the SR objective to achieve an SR $\geq$ 33 (0.3) is the one made of synthetic titanium oxide binder. The mixture with non-pigmented synthetic binder does not reach the target value. The results also show that the addition of 10% recycled material - RAP - has a very negative influence on the reflectance, halving the value.

These same samples were left outdoors, exposed to the action of solar radiation, measuring the surface temperature every hour by means of a thermographic camera. The values were obtained at a maximum ambient temperature of 37°C and a maximum solar radiation of 885 W/m$^2$.

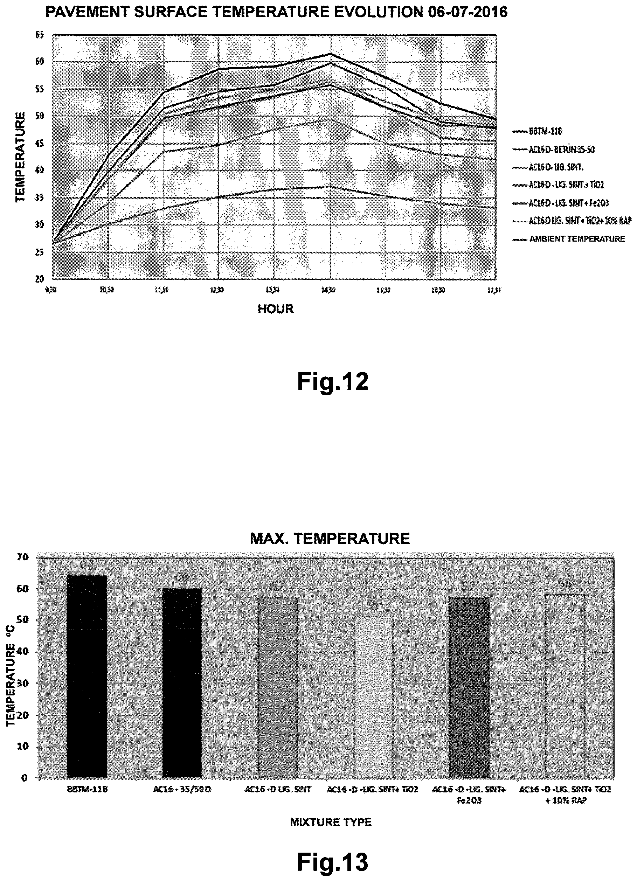

The graph in **Figure 12** shows curves of the evolution of the surface temperature on exposure to solar radiation for all samples.

From the results obtained, it can be observed that between two samples of AC16 D mixture, one with black bitumen 35/50 and the other with synthetic binder and TiO2, there is a maximum difference in surface temperature of 10°C. In the sample containing black bitumen of the BBTM-11B type, the difference increases to 13°C. Thus, the higher the value of reflectance in the samples, the lower the surface temperature.

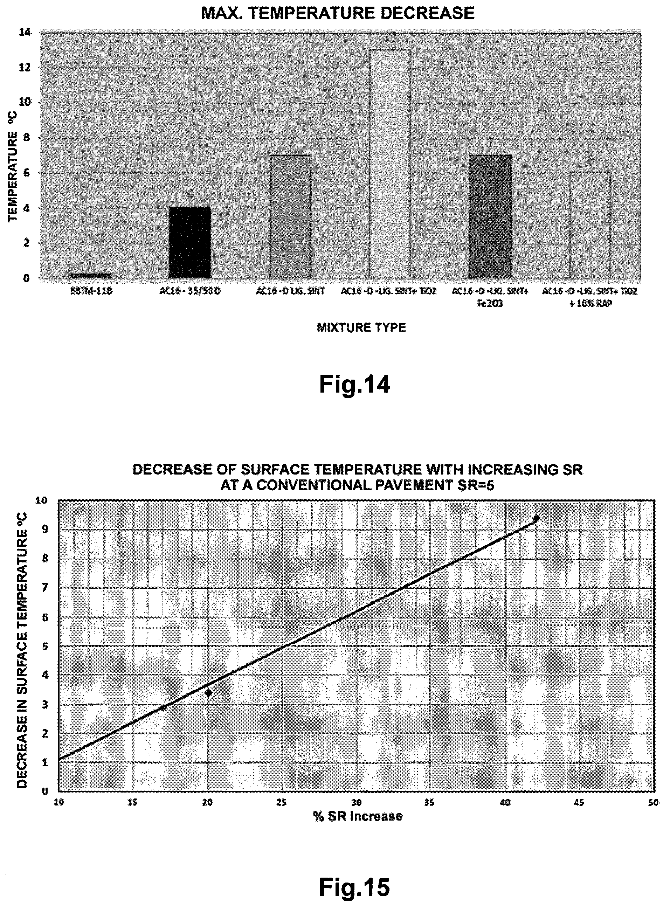

The bar graph in **Figure 13** shows the maximum temperatures reached by the samples. That of **Figure 14** shows the decrease in temperature in relation to the hottest surface.

With the values obtained, the trend graph in **Figure 15** has been made, showing the forecast of temperature decrease with the increase of SR in a pavement.

TABLE 10

| Mixture type | Bitumen-Pigment Type | Reflectance VIS | Reflectance IR | Reflectance SR |
|---|---|---|---|---|
| BBTM-11B | 45/80-65 | 5 | 9 | 7 |
| AC16 35/50 D | 35/50 | 6 | 9 | 8 |
| AC16 35/50 D | Pigment-free synthetic binder | 18 | 38 | 28 |
| AC16 35/50 D | Synthetic binder+ $TiO_2$ | 52 | 52 | 50 |
| AC16 35/50 D | Synthetic binder+ $Fe_2O_2$ | 11 | 42 | 27 |
| AC16 35/50 D | Synthetic binder+ $TiO_2$ + 10% RAP | 17 | 33 | 25 |

It can be established that starting from a certain value of solar reflectance on a conventional pavement, every 5% increase in SR due to the action of a reflective mixture, the surface temperature will drop by approximately 1°C.

Exposures have been conducted with the indicated rectangular and cylindrical samples on different days with maximum ambient temperatures ranging from 18 to 44°C and it has been observed that the difference remains at 10°C regardless of the ambient temperature, only the maximum temperature reached on the surface varying. By checking other meteorological parameters of these days, it has been observed that the solar radiation values on the days when the maximum difference oscillated around 10°C are similar, and only when the radiation value drops, the temperature difference also decreases. This leads us to the favourable conclusion that in the winter period the difference in temperature between conventional and reflective asphalt will be much smaller.

**Table 11** shows the most representative values obtained from different exposures to solar radiation on samples of conventional and reflective pavements in the region of Murcia (see Table 8). The exposure carried out on circular samples is also detailed, observing the difference of 10°C between the conventional mixture with black bitumen and the reflective mixture with synthetic binder and titanium oxide.

TABLE 11

| Sample exposure to solar radiation. Murcia | | | | |
|---|---|---|---|---|
| Date | Max. ambient temperature. | Max. temperature AC16 35/50 | Max. difference conventional pavement - reflective pavement | Maximum radiation w/m2 |
| 12/01/2017 | 18,0 | 39,7 | 8,4 | 520 |
| 11/11/2016 | 21,5 | 45,6 | 9,4 | 645 |
| 14/10/2016 | 24,0 | 44,5 | 9,4 | 910 |
| 27/10/2016 | 25,0 | 48,5 | 9,5 | 680 |
| 15/09/2016 | 28,5 | 54,2 | 9,7 | 865 |
| 11/10/2016 | 30,9 | 49,4 | 9,3 | 730 |
| 16/09/2016 | 30,4 | 55,8 | 9,5 | 890 |
| 06/07/2016 | 37,0 | 61,5 | 10,3 | 885 |
| 05/09/2016 | 44,0 | 69,1 | 10,3 | 895 |
| 19/10/2016 High cloudiness | 22,0 | 30,5 | 3,0 | 320 |

It has also been proven that this 10°C difference is maintained at different ambient temperatures between 18 and 44°C if the value of the incident solar energy is greater than 600 W/m$^2$. As the value of the incident energy decreases from this threshold value, the temperature difference between conventional and reflective surfaces decreases.

**2.1.2. Thermal behaviour during the cooling process in relation to conventional asphalt pavements.-**

It is also of interest to determine whether the temperature differences between the surface of a conventional pavement and that of a reflective pavement are maintained throughout the solar cycle. It has been seen that as the solar radiation increases the temperature difference between the two surfaces increases, but the cooling speed is unknown when the radiation decreases during the afternoon and night.

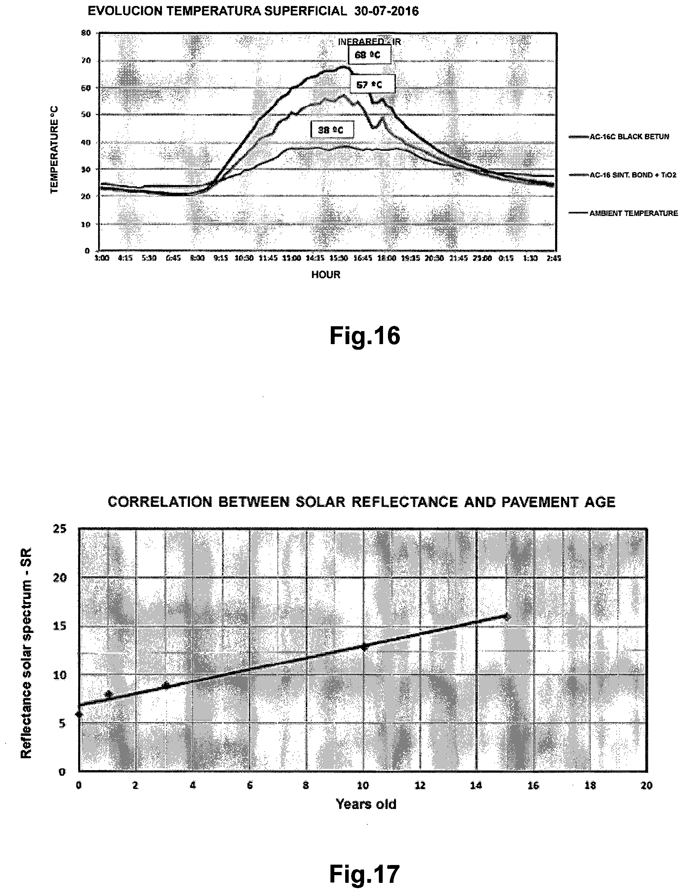

For this purpose, 30x40 cm samples of the mixtures AC16 35-50 D and AC16 LIG were set. SINT. D + TiO$_2$ were placed outdoors for 24 hours with contact thermographic probes to take temperature data every 15 minutes. The data have been stored in a Datalogger recorder. The resulting evolution of the surface temperature is shown in the graph in **Figure 16**.

It can be observed that the surface of the AC16 D mixture with synthetic binder and TiO$_2$ is always colder than the surface of the AC16 D mixture with black bitumen, helping to lower the ambient temperature and thus mitigate the heat island effect.

It could therefore be concluded that the reflective mixes remain cooler in the heatingcooling process than conventional mixes and can therefore be more durable by withstanding lower temperatures.

**In comparison with used asphalt pavements.-**

When a conventional pavement is to be replaced by a reflective one, the surface thermal advantage from a new or recently paved conventional pavement is known, but the advantage or temperature difference in relation to a used asphalt pavement is not. The initial reflectance of the used pavement must be determined.

According to bibliographical data, the reflectance of a conventional asphalt pavement varies with the passage of time; newly paved varies between 5-10 and aged can give values between 10-15.

The pyrometer has been considered appropriate to test these values, carrying out measurements of solar reflectance on asphalt pavements with different ages and different aggregates. Reflectance measurements of the visible have also been carried out with the colorimeter.

The resulting SR values in the solar and visible spectrum for a newly paved asphalt road and of those of various years of age are shown in Table 12.

From these values a trend graph can be made to predict the reflectance of an asphalt pavement over the years, as shown in **Figure 17.**

The previous conclusion is confirmed that every 5% increase in the solar reflectance obtained by changing a conventional pavement for a reflective pavement can lower the surface temperature by 1°C, and thus, by knowing the solar reflectance of the pavement to be replaced, we can predict the drop in surface temperature that will be obtained.

TABLE 12

| Asphalt pavement | | |
|---|---|---|
| Years old | VR | SR |
| Recently extended | 3 | 6 |
| 1 | 6 | 8 |
| 3 | 7 | 9 |
| 10 | 9 | 13 |
| 15 | 13 | 16 |

## 2.2. Reflective asphalt mixtures with anti-slip properties

The type of mixtures designed as the most suitable for the objective of marked reflectance, which are mixtures of the AC 16 SURF D type with synthetic binder, titanium oxide and limestone aggregate, must have minimum anti-slip properties when applied to the road surface. Since porphyry aggregates have better anti-slip properties than limestone aggregates, reflective mixtures have been made by changing part of the limestone aggregates for porphyry aggregates and their thermal and reflective behaviour has been studied.

The following mixtures have been manufactured and tested for their reflective behaviour:

- A: AC16 mix with synthetic binder +TiO2 with thick and fine porphyry aggregates
- B: Mixture AC16 with synthetic binder +TiO2 with coarse porphyry and fine limestone aggregates
- C: Mixture AC16 with synthetic binder +TiO2 with coarse and fine limestone aggregates
- D: Mixture AC16 with black bitumen with coarse porphyritic and fine limestone aggregates

In the first three mixtures (A, B and C) the same binder and $TiO_2$ have been used, only the type of aggregate changes. The first (A) is made with all porphyric aggregates. In the second (B) the coarse aggregates of the mix, which account for 50%, are porphyric aggregates and the fine, limestone. Mixture (C) is made from limestone aggregates. Mixture (D) is the conventional type of mix made of black bitumen, coarse porphyry aggregates and fine limestone aggregates.

The SR solar reflectance values obtained by spectrophotometry according to the ASTM E903-12 standard are shown in **Table 13.**

TABLE 13

| Solar Reflectance | | | |
|---|---|---|---|
| Type of Mixture | | | |
| A | B | C | D |
| 26 | 45 | 50 | 6 |

In consideration of these results, it can be noted that the mixture in which all the limestone aggregate has been replaced by porphyry (A), the reflectance drops by half and does not reach the SR = 33 value set as a target. However, for sample (B) where only the coarse aggregate has been replaced from limestone to porphyry, an acceptable SR value is obtained.

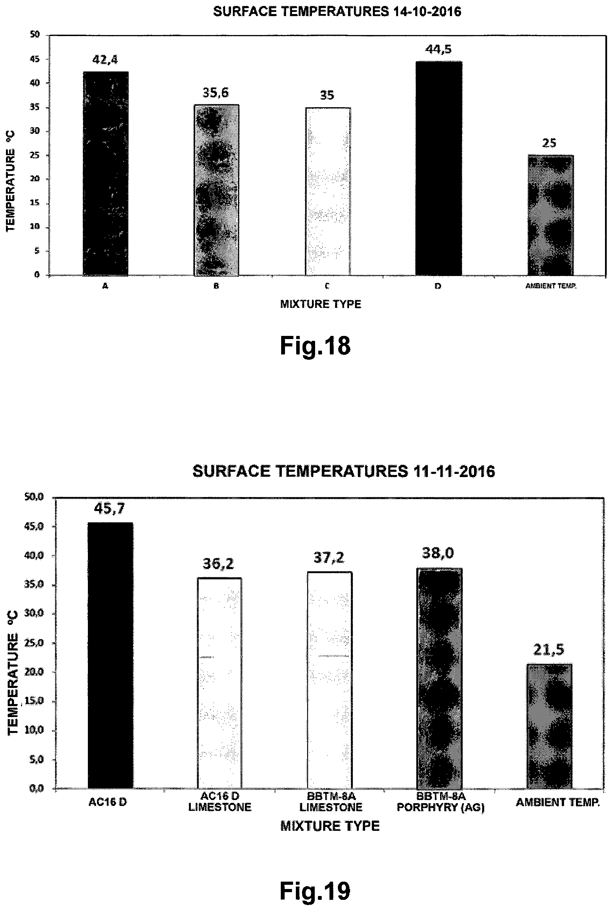

In order to test the effect of solar energy on the behaviour of each mixture, each mixture was exposed to the sun (14/10/2016) at an ambient temperature of 24°C and a maximum incident solar reflectance of 910 w/m2. The bar graph in **Figure 18** shows the maximum temperature values reached, with mixture B reaching a temperature between the two lowest ones.

## 2.3. Reflective asphalt mixtures of thin road surface.-

In theory, it can be affirmed that the designed reflective mixes have a higher price than conventional mixes. One way to compensate for this increase in cost is to design mixes that require the least possible thickness for their application. Within the catalogue of pavements shown in PG-3, the most suitable mix to test its behaviour when replaced by the AC16 SURF D type mix would be the BBTM-8A type.

Therefore, a study has been conducted on the thermal and reflective behaviour of a BBTM-8A type mixture with all the limestone aggregates as well as another mixture by containing porphyric aggregates in place of the coarse limestone aggregates. A comparison was made with the AC16 D type mixture, with synthetic binder and TiO2. The solar reflectance values obtained are those shown in **Table 14.**

TABLE 14

| Solar Reflectance | | | |
|---|---|---|---|
| Type of Mixture | | | |
| AC16 D 35/50 | AC16 D LIMESTONE | BBTM-8A LIMESTONE | BBTM-8A PORPHYRY (AG) |
| 6 | 50 | 42 | 38 |

The values obtained with the BBTM-8A mixtures are acceptable, although the values are lower than those of the AC16 D type mixtures.

On 11/11/2016 exposure to solar radiation was carried out and the maximum temperatures reached by these thin-layer mixtures were measured. The maximum ambient temperature was 21°C and the maximum solar radiation was 645 w/m$^2$. **Figure 19** shows the resulting graph of maximum temperatures.

### 2.3.1. Study of the behaviour and functionality of the BBTM 5A.-

The following are the results obtained in the laboratory and subsequent manufacturing in the process of designing a BBTM 5A type asphalt mix to obtain a pavement that mitigates the urban heat island effect according to the LEED v4 BD+C certification, which requires the value of the Solar Reflectance - SR to be achieved being equal to or greater than 33 to be catalogued as a reflective surface.

It has been decided to study the BBTM 5A mixture in order to reduce the costs due to the synthetic binder and the TiO2 in terms of the thickness used, which is only 2 cm, in comparison with the AC16D mixture which would need a minimum of 4 cm; and also considering that the installation will be on streets, mostly pertaining to city councils. All the results are factory manufactured mixtures.

Once the different characteristic parameters of this type of asphalt mixes have been studied, which will influence the Solar Reflectance (SR) and in turn the surface temperature as a result of solar radiation, we move on to study their mechanical, physical (SR) and functional behaviour.

### 2.3.1.1. Factory manufacture and installation.-

The manufacture of the mixtures has been carried out in a 220 Tn/h Marini batch plant (see photo 1), with the precaution of good prior cleaning of conventional bitumen residues in all devices to avoid contamination.

BBTM 5A mix with 35/50 bitumen and BBTM 5A mix with synthetic binder and TiO2 have been manufactured within the dosage and synthetic binder provision ranges preestablished for this type of BBTM A mix.

The reflective mix was poured conventionally with a paver and compaction was carried out with a metal roller, following the same guidelines as for a conventional mix. However, in order to avoid contamination, all the machine devices were cleaned beforehand, and the personnel used safety boots without any mixture residue and clean hand tools (shovels, rakes, etc.).

### 2.3.1.2. Mechanical characteristics.-

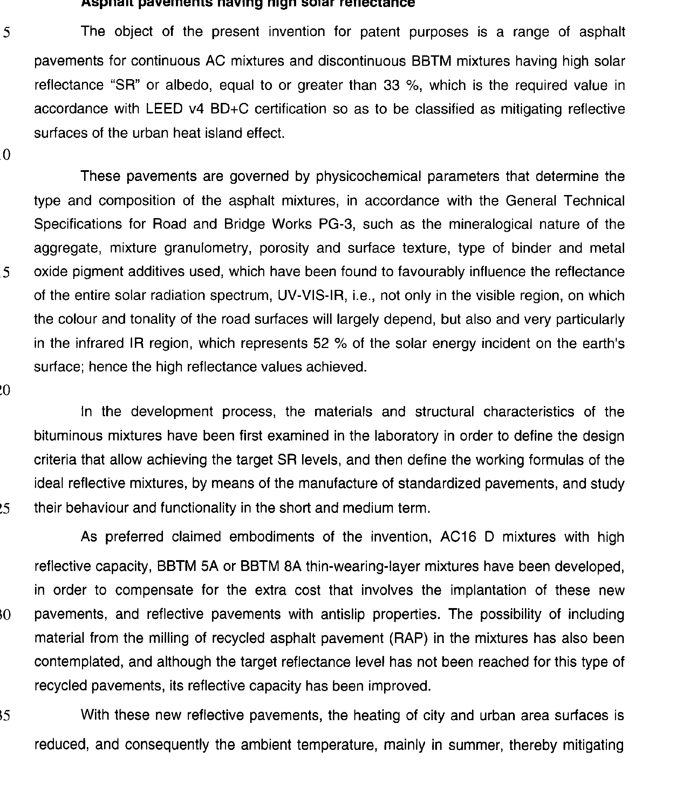

The mixture under study is BBTM 5A, with the granulometric curve according to UNE-EN 12697 2 represented in the graph in **Figure 20,** and a bitumen content over mixture of 5.0 %, and an F/BA ratio of around 1.3.

The volumetric values, according to UNE-EN 12697-6 and UNE-EN 12697-8, are those indicated in **Table 15**.

TABLE 15

| UNE-EN 12697-6 UNE-EN 13697-8 | BBTM 5A Conventional | BBTM 5A Reflective | Tolerance |
|---|---|---|---|
| Density (kg/m3) | 2401 | 2414 | |

(continued)

| UNE-EN 12697-6 UNE-EN 13697-8 | BBTM 5A Conventional | BBTM 5A Reflective | Tolerance |
|---|---|---|---|
| VMA (%) | 16,7 | 16,2 | -- |
| Vm (%) | 5,1 | 4,6 | $\geq 4$ |

**Indirect traction and water sensitivity:**

The results of the indirect traction and water sensitivity tests, in accordance with UNE-EN 12697-12, are shown in **Table 16.**

TABLE 16

| UNE-EN 12697-12 | BBTM 5A Conventional | BBTM 5A Reflective | Tolerance |
|---|---|---|---|
| ITSd (kPa) | 2084 | 1920 | -- |
| ITSR (%) | 92,6 | 91,9 | $\geq 90$ |

**Stability:**

The Marshall test has been carried out in accordance with the UNE-EN 12697-34 standard, obtaining the stability and deformation values as indicated in **Table 17.**

TABLE 17

| UNE-EN 12697-34 | BBTM 5A Conventional | BBTM 5A Reflective | Tolerance |
|---|---|---|---|
| Stability (KN) | 16,6 | 12,2 | -- |
| Deformation (mm) | 2,11 | 4,47 | -- |

**Resistance to plastic deformation:**

To obtain the data on plastic deformations, wheel tracking tests have been implemented in accordance with UNE-EN 12697-22, obtaining the results in **Table 18.**

TABLE 18

| UNE-EN 12697-22 | BBTM 5A Conventional | BBTM 5A Reflective | Tolerance |
|---|---|---|---|
| WTS air | 0,03 | 0,008 | 0,07 |
| PRD | 3,9 | 0,9 | 5 |

**Slip resistance:**

In order to obtain slip resistance values in the extended sections with mixtures made from both the conventional and reflective mixes the friction pendulum test - PTV test has been carried out in accordance with UNE-EN 13036-4 standard, with the resulting values indicated in **Table 19.** The values obtained in the two pavements are similar and satisfactory.

TABLE 19

| UNE-EN 13036-4 | BBTM 5A Conventional | BBTM 5A Reflective | Tolerance |
|---|---|---|---|
| PVT | 96 | 97 | -- |

**Macrotextures:**

To obtain values of surface macrotexture in the spread sections with the products made from both the conventional and the reflective mixes, the test has been carried out in accordance with the UNE-EN 13036-1 standard. The values obtained for both pavements, shown in **Table 20**, are also similar and satisfactory.

TABLE 20

| UNE-EN 13036-1 | BBTM 5A Conventional | BBTM 5A Reflective | Tolerance |
|---|---|---|---|
| MTD | 1,1 | 1,2 | ≥ 1,1 |

**2.3.1.3. Solar Reflectance - SR.-**

To obtain the solar reflectance of a surface, the ASTM E1918-06 standard has been applied by using a pyranometer, in which the test method for horizontal surfaces with a low slope is described. According to the test, the surface with conventional mixture has a SRreflectance of 7% and in the reflective mixture the SR is 40%, much higher. These values are shown in **Table 21.**

TABLE 21

| ASTM E1918-06 | BBTM 5A Conventional | BBTM 5A Reflective | Reflective pavement value-LEED |
|---|---|---|---|
| SR | 7 | 40 | 33 |

**2.3.1.4. Functional aspects.-**

In parallel with the tests to observe the mechanical behaviour of reflective pavements, the following studies have been carried out to check aspects which may be important for the functionality of these pavements.

**Surface and internal temperature:**

It was verified whether the difference in surface temperature that can exist between a conventional asphalt pavement and a reflective pavement exposed to solar radiation also exists inside the mix, with the possibility that this could affect the durability of the pavement.

For this purpose, surface temperatures were measured at a depth of 2 cm on two samples, one of conventional asphalt pavement and the other of reflective pavement by exposure to solar energy in the open air with an ambient temperature of 36°C and radiation of 950 w/m$^2$. It was observed that the difference experienced on the surface is also observed in the interior, so reflective pavements will withstand less interior temperature than conventional asphalt pavements. This difference can be up to 10°C.

**Behaviour of the mixture in the open air:**

In reflective pavements, the reflectance of the visible spectrum is approximately 50% of the total solar reflectance. High visible spectrum reflectance values depend on the light colours of the pavement, so that if the pavement is darkened due to exposure to the weather, the reflectance will decrease and become less effective. Below is the colour variation of the designed reflective flooring exposed to the elements for 10 months.

To check if the colour of the reflective flooring changes due to the action of exposure to the weather, a sample of the reflective flooring was placed outside and the reflectance of the visible and the CIELAB system colour coordinates (L*, a* and b*) was measured using a differential colourimeter for 10 months (see photo 14- Outdoor reflective mixture test chart 9). The resulting reflectances and CIELAB values are those indicated in **Table 22.**

It can be seen that the reflective pavement sample exposed to the weather changes to lighter shades (increase in the L* value) and less yellow (decrease in the b* coordinate), increasing the reflectance of the visible light. This feature will help to maintain the performance of reflective pavements.

TABLE 22

| Colorimetric characteristic | Initial Values | Values 5 months | Values 8 months | Values 10 months |
|---|---|---|---|---|
| Visible Reflectance | 45 | 46 | 50 | 51 |

(continued)

| Colorimetric characteristic | | Initial Values | Values 5 months | Values 8 months | Values 10 months |
|---|---|---|---|---|---|
| Values CIELab | L* | 74,22 | 74,49 | 77,08 | 77,35 |
| | a* | 1,13 | 1,33 | 0,95 | 0,92 |
| | b* | 12,47 | 9,49 | 7,60 | 7,61 |

**Reflective mixtures and UV rays:**

Another aspect that has been studied of the reflective pavement's functionality is related to health. In the solar spectrum, the wavelength energy in the UV range is the most penetrating and harmful to human health so it is important that reflective pavements absorb this energy and do not reflect it, thereby rendering it harmless. The solar reflectance in the three spectra (UV-VIS-IR) has been measured separately in samples of reflective pavements by means of spectrography.

The designed reflective mixture has a reflectance of the full solar spectrum of about 40%. It is of interest to note the reflectance values of the UV spectrum and to compare it with a conventional asphalt pavement mix.

By using the UV-VIS-IR spectrophotometer, reflectances have been measured in samples of both reflective and conventional mixes from 250nm to 2400nm (see graph 2), covering the whole UV-VIS-IR solar spectrum. ASTM E903-12 and ASTM G173-03 test standards have been used. Separate values were obtained, and it was found that although the reflective mixture has a solar reflectance between 40-45%, the reflectance of the UV spectrum is only 10%. Therefore, the use of reflective pavements are not harmful to health because of their low reflectance.

The graph in **Figure 21** shows the reflectances in the wavelength spectra between 250 and 2400nm of the two pavements and the spectrum produced by snow. The UV reflectance for the two pavements is similar, especially at more harmful lower wavelengths. It is also evident that snow has a very high UV reflectance, thus protection is required if one should stay in the snow.

**2.3.1.5. Conclusions.-**

The conclusions obtained after the research processes carried out on the basis of the designed reflective mixture BBTM-5A, due to the possibility of using low thicknesses, are as follows:

- The reflective mixes designed comply with the specifications set out in PG-3, and their results are similar to those of conventional asphalt mixes.

- The internal temperature in reflective mixtures exposed to the elements is lower than that of conventional mixtures at the same level obtained on the surface.

- After eight months of exposure to the weather, there is no darkening of the reflective mixtures.

- They have a very low reflectance in the UV spectrum, absorbing 90% of the UV spectrum (even though they have high total solar reflectance), so new pavements are not harmful to health.

As a final conclusion, it can be stated that reflective asphalt pavements can contribute in a preventive way to climate change by contributing to the reduction of $CO_2$ emissions through their impact on the reduction of energy consumption for air conditioning and urban lighting, and can also contribute from a corrective point of view to mitigate the effects of excess heat in summer in urban areas.

**Claims**

1. Asphalt pavements having high solar reflectance, with an SR index equal to or greater than 33 %, in accordance with LEED v4 BD+C certification, for both types of hot bituminous mixtures commonly used as asphalt wearing layers on streets and highways: bituminous concrete AC-type mixtures, according to UNE-EN 13108-1, and discontinuous BBTM-type mixtures, according to UNE-EN 13108-2, developed on the basis of physicochemical parameters that determine the type and composition of the mixtures: limestone aggregates for coarse and fine, or porphyry aggregates for coarse and limestone aggregates for fine, smaller maximum size of coarse aggregate, light or colourless pigmentable synthetic binder, white titanium oxides, red iron oxides and/or yellow iron oxides as additives, dense/semidense granulometry, type D or S for AC mixtures, or type A or B for discontinuous BBTM mixtures, less number of holes and less surface texture **characterized by** asphalt wearing mixtures of type:

- AC16 SURF D, with a maximum aggregate size of 16 mm, white titanium dioxide (TiO$_2$) as an additive, granulometry type D, a maximum number of holes of 7 %, and pigmentable synthetic binder in a minimum binder allowance of 5.5 % by mass over the total of the mixture,
- BBTM 5A or BBTM 8A, discontinuous mixtures with a maximum aggregate size of 8 mm, white titanium dioxide (TiO$_2$) as an additive, granulometry type A, a maximum number of holes of 16 %, and pigmentable synthetic binder in a minimum binder allowance of 5.5 % by mass over the total of the mixture.

2. Asphalt pavements with improved solar reflectance, for both types of hot bituminous mixtures commonly used as asphalt wearing layers on streets and highways: bituminous concrete AC-type mixtures, according to UNE-EN 13108-1, and discontinuous BBTM-type mixtures, according to UNE-EN 13108-2, having physicochemical parameters for the different types and compositions of the mixtures according to claim 1, **characterized by** a rate of recycled material from the milling of AC16 SURF S-type asphalt pavement (RAP), up to a 25 %.

## Patentansprüche

1. Asphaltbeläge mit hoher Sonnenstrahlen-Reflexion, mit einem SR-Index gleich oder größer als 33 %, im Einklang mit der LEED-Zertifizierung v4 BD+C, geeignet für beide allgemein gebräuchlichen Heißbitumenmischungen für Asphalt-Verschleißschichten auf Straßen und Schnellstraßen: Asphaltbetonmischungen des Typs AC gemäß UNE-EN 13108-1 und diskontinuierlich produzierte Mischungen vom Typ BBTM gemäß UNE-EN 13108-2, entwickelt auf der Grundlage physikalisch-chemischer Parameter, die Typ und Zusammensetzung der Mischung vorgeben: grober/feiner Kalksteinschotter, oder Porphyrschotter für grobe und Kalksteinschotter für feine Körnung, kleinere Maximalgröße für groben Schotter, helles oder farbloses, mit Pigmenten versetzbares Bindemittel, weißes Titanoxid-Granulat, rotes Eisenoxyd oder gelbes Eisenoxid als Zusätze, dichte/halbdichte Granulometrie, Typ D oder S für AC-Mischungen oder Typ A oder B für diskontinuierlich produzierte BBTM-Mischungen, geringerer Lochanteil und feinere Oberflächentextur, **gekennzeichnet durch** Mischungen für Asphalt-Verschleißschichten folgenden Typs:

- AC16 SURF D, mit maximaler Granulatgröße von 16 mm, versetzt mit weißem Titanoxyd (TiO$_2$), mit Granulometrie Typ D, einem maximalen Lochanteil von 7 %, weiterhin mit pigmentierbarem, synthetischem Bindemittel mit einem zulässigen Bindemittelanteil von bis zu 5,5 % an der Masse der gesamten Mischung.
- BBTM 5A oder BBTM 8A. diskontinuierlich produzierte Mischungen mit maximaler Granulatgröße von 8 mm, versetzt mit weißem Titanoxyd (TiO$_2$), mit Granulometrie Typ A, einem maximalen Lochanteil von 16 %, weiterhin mit pigmentierbarem, synthetischem Bindemittel mit einem zulässigen Bindemittelanteil von bis zu 5.5 % an der Masse der gesamten Mischung.

2. Asphaltbeläge zur Verbesserung der Sonnenstrahlen-Reflexion, geeignet für beide allgemein gebräuchlichen Heißbitumenmischungen für Asphalt-Verschleißschichten auf Straßen und Schnellstraßen: Asphaltbetonmischungen des Typs AC gemäß UNE-EN 13108-1 und diskontinuierlich produzierte Mischungen vom Typ BBTM gemäß UNE-EN 13108-2, **gekennzeichnet durch** physikalisch-chemische Parameter für verschiedene Typen und Zusammensetzungen der Mischungen gemäß Patentanspruch 1, **gekennzeichnet durch** einen Anteil recycelten Materials von 25 %, gewonnen durch das Mahlen von Asphaltbelag des Typs AC16 SURF S (RAP).

## Revendications

1. Revêtements en asphalte qui possèdent une haute réflectance solaire, avec un indice de RS égal ou supérieur à 33 % conformément à la certification LEED v4 BD+C, pour les deux types de mélanges bitumineux chauds habituellement utilisés comme couches de roulement d'asphalte sur les chaussées et voies rapides : mélanges de bétons bitumineux de type AC. selon la norme UNE-EN 13108-1, et mélanges discontinus de type BBTM, selon la norme UNE-EN 13108-2, développés à partir de paramètres physico-chimiques qui déterminent le type et la composition des mélanges : granulats calcaires pour particules grossières et fines, ou agrégats de porphyre pour particules grossières et granulats calcaires pour particules fines, dimension maximale plus petite des gros granulats, liant pigmentable synthétique clair ou incolore, oxydes de titane blancs, oxydes de fer rouges et/ou oxydes de fer jaunes comme additifs, granulométrie dense/mi-dense, type D ou S pour mélanges AC, ou type A ou B pour melanges discontinus de BBTM, nombre réduit de pores et texture superficielle réduite ; **caractérisés par** des mélanges d'enrobés résistants du type ;

- AC16 SURF D, avec une dimension maximale de granulat de 16 mm, dioxyde de titane blanc ($TiO_2$) comme additif, granulométrie de type D, un nombre maximum de pores de 7 %, et liant pigmentable synthétique avec une part minimale de liant de 5,5 % en poids par rapport au total du mélange,
- BBTM 5A ou BBTM 8A, mélanges discontinus avec une dimension maximale de granulats de 8 mm, dioxyde de titane blanc ($TiO_2$) comme additif, granulométrie de type A, un nombre maximum de pores de 16 %, et un liant pigmentable synthétique avec une part minimale de liant de 5,5 % en poids par rapport au total du mélange,

2. Revêtements en asphalte possédant une réflectance solaire améliorée pour les deux types de mélanges bitumineux chauds habituellement utilisés comme couches de roulement d'asphalte sur les chaussées et les voies rapides : mélanges de bétons bitumineux de type AC, selon la norme UNE-EN 13108-1, et mélanges discontinus de type BBTM-type, selon la norme UNE-EN 13108-2, ayant des paramètres physico-chimiques pour les différents types et compositions de mélanges selon la revendication 1, **caractérisé en ce que** le taux de matériau recyclé du broyage du revêtement d'asphalte de type AC16 SURF S (RAP)peut atteindre 25 %.

SOLAR REFLECTANCE SCALE

Total absorbance          Total relectance

0.0   0.1   0.2   0.3   0.4   0.5   0.6   0.7   0.8   0.9   1.0

**High solar reflectance cools pavement surfaces**

**Fig.1**

**Fig.2**

REFLECTANCE OF THE SOLAR SPECTRUM (SR)- AGGREGATES

**Fig.3**

REFLECTANCE OF THE SOLAR SPECTRUM (SR)- BINDER

**Fig.4**

REFLECTANCE OF THE SOLAR SPECTRUM (SR)- MIXTURES OF BLACK BITUMEN WITH PIGMENT

Fig.5

REFLECTANCE OF THE SOLAR SPECTRUM (SR)- SYNTHETIC BINDER BLENDS WITH PIGMENT

Fig.6

REFLECTANCE OF THE SOLAR SPECTRUM (SR)- SYNTHETIC BINDER BLENDS WITH PIGMENT

Fig.7

(a)         (b)         (c)

# Fig.8

TEMPERATURE EVOLUTION OF BITUMINOUS MIXES - 23-06-2016

# Fig.9

EVOLUTION OF SURFACE TEMPERATURE OF PAVEMENTS 18 and 19-07-2016

## Fig.10

## Fig.11

## PAVEMENT SURFACE TEMPERATURE EVOLUTION 06-07-2016

**Fig.12**

## MAX. TEMPERATURE

**Fig.13**

## MAX. TEMPERATURE DECREASE

**Fig.14**

## DECREASE OF SURFACE TEMPERATURE WITH INCREASING SR AT A CONVENTIONAL PAVEMENT SR=5

**Fig.15**

EVOLUCION TEMPERATURA SUPERFICIAL  30-07-2016

**Fig.16**

CORRELATION BETWEEN SOLAR REFLECTANCE AND PAVEMENT AGE

**Fig.17**

Fig.18

Fig.19

Asphalt pavements having high solar reflectance

The object of the present invention for patent purposes is a range of asphalt pavements for continuous AC mixtures and discontinuous BBTM mixtures having high solar reflectance "SR" or albedo, equal to or greater than 33 %, which is the required value in accordance with LEED v4 BD+C certification so as to be classified as mitigating reflective surfaces of the urban heat island effect.

These pavements are governed by physicochemical parameters that determine the type and composition of the asphalt mixtures, in accordance with the General Technical Specifications for Road and Bridge Works PG-3, such as the mineralogical nature of the aggregate, mixture granulometry, porosity and surface texture, type of binder and metal oxide pigment additives used, which have been found to favourably influence the reflectance of the entire solar radiation spectrum, UV-VIS-IR, i.e., not only in the visible region, on which the colour and tonality of the road surfaces will largely depend, but also and very particularly in the infrared IR region, which represents 52 % of the solar energy incident on the earth's surface; hence the high reflectance values achieved.

In the development process, the materials and structural characteristics of the bituminous mixtures have been first examined in the laboratory in order to define the design criteria that allow achieving the target SR levels, and then define the working formulas of the ideal reflective mixtures, by means of the manufacture of standardized pavements, and study their behaviour and functionality in the short and medium term.

As preferred claimed embodiments of the invention, AC16 D mixtures with high reflective capacity, BBTM 5A or BBTM 8A thin-wearing-layer mixtures have been developed, in order to compensate for the extra cost that involves the implantation of these new pavements, and reflective pavements with antislip properties. The possibility of including material from the milling of recycled asphalt pavement (RAP) in the mixtures has also been contemplated, and although the target reflectance level has not been reached for this type of recycled pavements, its reflective capacity has been improved.

With these new reflective pavements, the heating of city and urban area surfaces is reduced, and consequently the ambient temperature, mainly in summer, thereby mitigating

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004218301 B
- JP 2005061042 B
- JP 2012087502 B
- CN 202509360
- US 2010247753 A

- ES 2196277T3
- ES 2605729 T3
- WO 2016163346 A1
- KR 20150062330 A

**Non-patent literature cited in the description**

- **GRAU et al.** Pavimentos reflectantes para la mitigation del cambio climatico. *Estudio teorico y de laboratorio. ASFALTO y pavimentación,* 26 March 2018, vol. VIII (28), 71-13